# EUROPEAN PATENT SPECIFICATION

(11) **EP 3 780 249 B1**
(45) Date of publication and mention of the grant of the patent: **27.12.2023**
(21) Application number: 18912130.4
(22) Date of filing: 10.08.2018
(51) Int. Cl.: H01M 10/613, H01M 10/615, H01M 10/625, H01M 10/633, H01M 10/6568, H01M 10/44

(54) **BATTERY TEMPERATURE CONTROL DEVICE AND METHOD, CONTROLLER, STORAGE MEDIUM, AND BATTERY CHARGING AND SWAPPING STATION**
VERFAHREN UND VORRICHTUNG ZUR BATTERIETEMPERATURREGELUNG, REGLER, SPEICHERMEDIUM SOWIE BATTERIELADE- UND WECHSELSTATION
DISPOSITIF ET PROCÉDÉ DE RÉGULATION DE TEMPÉRATURE DE BATTERIE, DISPOSITIF DE COMMANDE, SUPPORT D'INFORMATIONS ET STATION DE CHARGE ET DE PERMUTATION DE BATTERIE

(30) Priority: 26.03.2018 CN 201810254288
(43) Date of publication of application: 17.02.2021
(73) Proprietor: NIO (ANHUI) HOLDING CO., LTD, Economic and Technological Development Zone Hefei Anhui 230601 (CN)
(72) Inventor: WU, Mingyan, Shanghai (CN); QI, Wengang, Shanghai (CN); ZHAO, Zhiling, Shanghai (CN); YANG, Chao, Shanghai (CN)
(74) Representative: Laine IP Oy
(86) International application number: PCT/CN2018/100021
(87) International publication number: WO 2019/184193

(56) References cited:
- CN-A- 107 658 526
- CN-A- 107 658 526
- CN-A- 107 749 506
- CN-A- 107 749 506
- CN-U- 207 994 012
- US-A1- 2017 088 007
- US-B2- 9 527 403

## Description

### Technical Field

The invention relates to the technical field of new energy vehicles, and in particular to a battery temperature control apparatus and method, a controller, a storage medium, and a battery charging and swap station.

### Background Art

With the rapid development of electric vehicles, how to quickly realize the energy supply of the electric vehicles and make the electric vehicles as convenient as traditional fuel vehicles is one of the major problems faced by the electric vehicle industry. The emergence of charging and swap stations has successfully solved this problem. At a battery charging and swap station, a battery in a vehicle that needs energy replenishment is swapped out for a fully charged battery in a battery compartment, and the swapped-out battery is placed into the battery compartment for charging. A lithium-ion battery is a core component of the electric vehicle, which determines key indicators such as a charging time of the battery at the battery charging and swap station, a range, costs, service life, and safety of the vehicle. As the user's requirements for electric vehicles increase, the requirements for the power performance and fast charging performance of a battery system are getting higher and higher, which is followed by an increase in the design requirements for a battery cooling system. In high-rate change and discharge conditions, traditional natural cooling and forced air cooling often cannot meet heat dissipation requirements. Therefore, a growing number of liquid cooling manners with higher heat dissipation efficiency have become mainstream heat dissipation manners for lithium batteries.

It is best to keep the temperature of a lithium-ion battery within the range of 20°C to 35°C while the lithium-ion battery is charged. When the temperature of the lithium-ion battery is lower than this temperature range, it is easy to cause a phenomenon of lithium deposition during charge or power reduction during charge and discharge; and when the temperature of the lithium-ion battery is greater than this range, the cycle life of the lithium-ion battery will drop sharply, and thermal safety issues may also occur. At present, in a water-cooling system of a battery charging and swap station, one water-cooling system is usually used to control temperature of a plurality of batteries, which has at least the following disadvantages:
(1) A cooling capacity and a heating capacity of a single water-cooling system are limited. When the temperature of a battery delivered into the water-cooling system is too high or too low, causing the amount of heat exchange between the battery and fluid to be greater than the cooling capacity or the heating capacity of the water-cooling system, the temperature of the fluid provided by the water-cooling system cannot be maintained at a set value, which affects other batteries that have been within a proper temperature range and being charged.
(2) Because temperature statuses of various batteries are different, a supply water temperature of the water-cooling system can only be set to a temperature value that comprehensively considers thermal performance of all batteries, which, however, will greatly reduce the amount of heat exchange between the water-cooling system and a single battery, increase a charging time of the battery, reduce safety of battery charging and a life of the battery, and will cause a waste of performance of the water-cooling system.
(3) A lithium battery is in a low-rate discharge state when being in an electric vehicle. During low-rate discharge, the battery has less stringent temperature requirements than those during charge. In summer, the temperature of fluid provided by the water-cooling system of the vehicle is usually higher than that in the battery charging and swap station. In winter, the temperature of a coolant on the vehicle will be lower than that of a coolant in a battery swap station. At present, in order to prevent the problem of fluid freezing in areas with cold weather, a fluid containing 50% ethylene glycol is used in most cases, but the density of the coolant with the 50% ethylene glycol is greatly affected by a temperature. If the temperature of the coolant in the water-cooling system on the electric vehicle is higher than that of the coolant in the battery charging and swap station, the problem of thermal expansion of the coolant will occur, resulting in a decreasing amount of coolant in the water-cooling system in the battery charging and swap station, and an increasing amount of coolant in the water-cooling system in the electric vehicle; otherwise, the thermal expansion will lead to an increasing amount of liquid in the battery swap station and a decreasing amount of liquid in the electric vehicle.
(4) The viscosity of 50% ethylene glycol is also greatly affected by a temperature. In the case of the existing manner in which one water-cooling system in a battery charging and swap station corresponds to a plurality of batteries, it may happen that the temperature of the battery just sent to the battery charging and swap station is too low, and the amount of the heat exchange between the water-cooling system and the battery is greater than the heating capacity of the water-cooling system, which causes the water temperature provided by the water-cooling system to be too low, and causes the capacity of a water pump to be insufficient to provide a sufficient flow capacity, thereby affecting the heat dissipation of all the lithium batteries corresponding to the water-cooling system.

Therefore, how to achieve a proper, effective and safe control of the temperature of lithium-ion batteries has become a technical problem to be solved urgently.

US 9 527 403 discloses already a battery temperature control apparatus and method for a battery charging and swap station of an electric vehicle.

### Summary of the Invention

The technical problem to be solved by the invention is how to provide a battery temperature control apparatus and method, a controller, a storage medium, and a battery charging and swap station, which use a modular manner to realize individual control of the temperature of each battery, adapt to diversity of a temperature status of a lithium battery, and ensure efficiency of heat exchange between a water-cooling system and each battery.

In order to solve the technical problem above, according to one aspect of the invention, a battery temperature control apparatus for a battery charging and swap station of an electric vehicle is provided, the apparatus comprising: a control module and a plurality of water-cooling modules, the water-cooling modules being connected by using pipelines, and one or more of the pipelines being respectively provided with one or more control valves, wherein

the control module controls connection and disconnection of the pipelines by controlling the opening and closing of the control valves, thereby controlling the number of water-cooling modules connected to a corresponding battery; and
the water-cooling module is configured to cool or heat a refrigerant.

Further, the control module is further configured to control a cooling capacity and a heating capacity of each connected water-cooling module.

Further, the control module comprises a parameter acquisition unit, a configuration unit, and an execution unit, wherein the parameter acquisition unit is connected to the configuration unit, and the configuration unit is connected to the execution unit;
the parameter acquisition unit is configured to acquire a battery temperature status of a vehicle with a battery to be swapped and a temperature status of a battery to be used as a substitute in the vehicle with a battery to be swapped;
the configuration unit is configured to configure the number of water-cooling modules that need to be connected, and a cooling capacity and a heating capacity of each connected water-cooling module based on the battery temperature status of the vehicle with a battery to be swapped and the temperature status of the battery to be used as the substitute in the vehicle with a battery to be swapped; and
the execution unit is configured to connect in series the water-cooling modules that need to be connected, to heat or cool the battery to be used as the substitute in the vehicle with a battery to be swapped, to make it consistent with the current supply water temperature of the battery on the vehicle with a battery to be swapped.

Further, the parameter acquisition unit is further configured to acquire travelling conditions of the vehicle with a battery to be swapped, and determine, according to a correspondence relationship between the travelling conditions and the battery temperature status, the battery temperature status of the vehicle with a battery to be swapped.

Further, the travelling conditions comprise one or more of: high temperature and low speed, high temperature and normal speed, high temperature and high speed, low temperature and low speed, low temperature and normal speed, and low temperature and high speed.

Further, the control module comprises a temperature acquisition unit and an adjustment unit, the temperature acquisition unit being connected to the adjustment unit, wherein
the temperature acquisition unit is configured to acquire a temperature status of a charging battery, the charging battery being a battery in a charging state in the battery charging and swap station of the electric vehicle; and
the adjustment unit is configured to adjust the number of water-cooling modules connected to the charging battery, and the cooling capacity and the heating capacity of each connected water-cooling module based on the temperature status of the charging battery.

Further, the apparatus comprises a plurality of output ends connected to the water-cooling modules by using the pipelines, and the battery of the battery charging and swap station of the electric vehicle is connected to the battery temperature control apparatus by using the output ends.

Further, each of the pipelines comprises one water supply pipeline and a water return pipeline corresponding to the water supply pipeline, and each of the water supply pipelines and each of the water return pipelines are provided with one control valve.

Further, the control valve is a solenoid valve.

Further, the water-cooling module comprises a compressor, a water-cooling plate, a water pump, electric heater, a water tank, a temperature sensor, and an expansion valve.

According to another aspect of the invention, a battery temperature control method for a battery charging and swap station of an electric vehicle is provided, the method comprising the following steps:
connecting a plurality of water-cooling modules by using pipelines, wherein the water-cooling module is configured to cool or heat a refrigerant;
respectively arranging one or more control valves on one or more of the pipelines; and
controlling connection and disconnection of the pipelines by controlling the opening and closing of the control valves, thereby controlling the number of water-cooling modules connected to a corresponding battery pack.

Further, when being used in a battery swap process of the electric vehicle, the method comprises the following steps:
acquiring a battery temperature status of a vehicle with a battery to be swapped and a temperature status of a battery to be used as a substitute in the vehicle with a battery to be swapped;
configuring the number of water-cooling modules that need to be connected, and a cooling capacity and a heating capacity of each connected water-cooling module based on the battery temperature status of the vehicle with a battery to be swapped and the temperature status of the battery to be used as the substitute in the vehicle with a battery to be swapped; and
connecting in series the water-cooling modules that need to be connected, to heat or cool the battery to be used as the substitute in the vehicle with a battery to be swapped, to make it consistent with the current supply water temperature of the battery on the vehicle with a battery to be swapped.

Further, said acquiring a battery temperature status of a vehicle with a battery to be swapped comprises the following steps:
acquiring travelling conditions of the vehicle with a battery to be swapped, and determining, according to a correspondence relationship between the travelling conditions and the battery temperature status, the battery temperature status of the vehicle with a battery to be swapped.

Further, the travelling conditions comprise one or more of: high temperature and low speed, high temperature and normal speed, high temperature and high speed, low temperature and low speed, low temperature and normal speed, and low temperature and high speed.

Further, the method is used in a battery charging process, and comprises the following steps:
acquiring a temperature status of a charging battery, the charging battery being a battery in a charging state in the battery charging and swap station of the electric vehicle; and
adjusting the number of water-cooling modules connected to the charging battery, and the cooling capacity and the heating capacity of each connected water-cooling module based on the temperature status of the charging battery.

According to a further aspect of the invention, a controller is provided, which comprises a memory and a processor, wherein the memory stores a computer program that, when executed by the processor, is capable of implementing the steps of the method.

According to a further aspect of the invention, a computer-readable storage medium for storing a computer program is provided, wherein the program, when executed by a computer or a processor, implements the steps of the method, a battery charging and swap station, characterized by comprising the battery temperature control apparatus for a battery charging and swap station of an electric vehicle according to any one of claims 1 to 9.

According to a further aspect of the invention, a battery charging and swap station is provided, which comprises the above battery temperature control apparatus for a battery charging and swap station of an electric vehicle.

The invention has obvious advantages and beneficial effects as compared with the prior art. By means of the above technical solutions, the battery temperature control apparatus and method, the controller, the storage medium, and the battery charging and swap station of the invention can achieve considerable technical progress and practicality, have a wide range of industrial utility value, and have at least the following advantages:
(1) a modular manner is used, and when the cooling capacity, the heating capacity, and the flow capacity of a single water-cooling module cannot meet the requirements of a lithium battery, one or more water-cooling modules can be connected in series to increase the cooling capacity, the heating capacity and the flow capacity, realize individual control of the temperature of each battery, and adapt to diversity of a temperature status of the lithium battery;
(2) efficiency of heat exchange between a water-cooling system and each battery is ensured, and the temperature of the battery can be quickly and effectively controlled without causing a waste of performance and energy of the water-cooling system;
(3) the mutual influence between the temperatures of the batteries is avoided;
(4) the flow capacity to each battery is ensured;
(5) a change in a volume of a coolant that is caused by a difference between the temperatures of the coolant in the battery charging and swap station and the electric vehicle is prevented.

The description above is only summary of the technical solutions of the invention. In order to understand the technical means of the invention more clearly for implementation according to the contents of the specification, and in order to make the above and other objectives, features and advantages of the invention more apparent and easy to be understood, preferred embodiments are especially taken as examples in conjunction with the accompanying drawings, and the detailed description is as follows.

### Brief Description of the Drawings

FIG. 1 is a schematic diagram of a battery temperature control apparatus for a battery charging and swap station of an electric vehicle provided in an embodiment of the invention.
FIG. 2 is a schematic diagram of a battery temperature control apparatus for a battery charging and swap station of an electric vehicle being arranged on a battery storage apparatus provided in an embodiment of the invention.

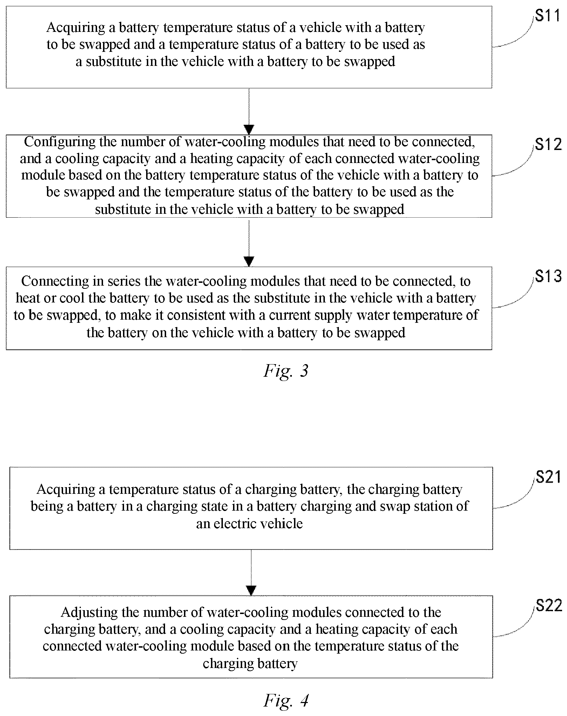

FIG. 3 is a flowchart of a battery temperature control method for a battery charging and swap station of an electric vehicle provided in an embodiment of the invention.
FIG. 4 is a flowchart of a battery temperature control method for a battery charging and swap station of an electric vehicle provided in another embodiment of the invention.

### Description of reference numerals:

1: Control module
2: Water-cooling module
3: Pipeline
4: Control valve
5: Output end

### Detailed Description of Embodiments

In order to further illustrate the technical means used to achieve the intended purpose of the invention and the technical effects thereof, specific implementations of a battery temperature control apparatus and method, a controller, a storage medium, and a battery charging and swap station proposed in the invention and the effects thereof are described in detail hereinafter in conjunction with the accompanying drawings and the preferred embodiments.

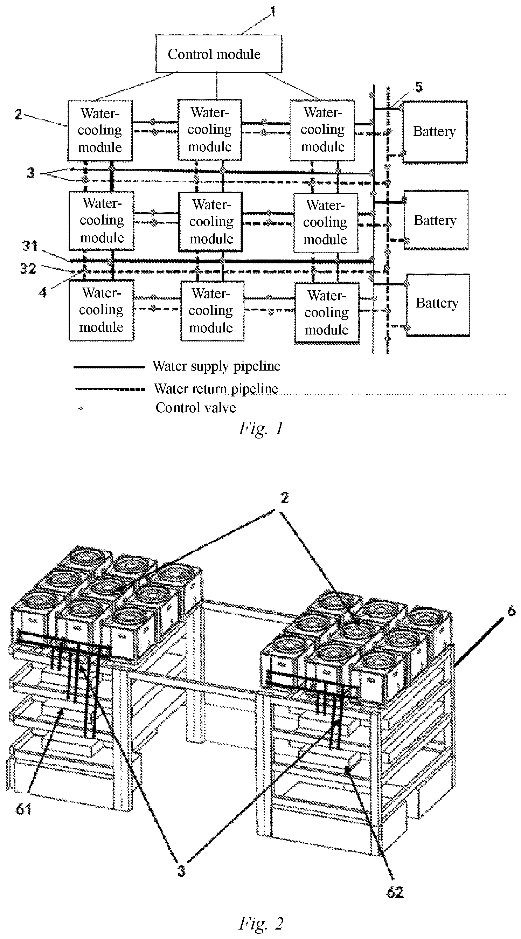

An embodiment of the invention provides a battery temperature control apparatus for a battery charging and swap station of an electric vehicle, which, as shown in FIG. 1, comprises: a control module 1 and a plurality of water-cooling modules 2, the water-cooling modules 2 being connected by using pipelines 3, and one or more of the pipelines 3 being respectively provided with one or more control valves 4, wherein the control module 1 controls connection and disconnection of the pipelines 3 by controlling the opening and closing of the control valves 4, thereby controlling the number of water-cooling modules 2 connected to a corresponding battery; and the water-cooling module 2 is configured to cool or heat a refrigerant.

As an example, the control module 1 may further control a cooling capacity and a heating capacity of each connected water-cooling module 2. The pipeline 3 is a pipe that transmits a working fluid in a hydraulic system. The control valve 4 may be a battery valve. The battery valve is an electromagnetic control industrial device, is an automation basic component used to control a fluid, and is an actuator and is not limited to being hydraulic and pneumatic.

It should be noted that each water-cooling module 2 can be configured with the same cooling capacity range and heating capacity range, that is, the maximum cooling capacity, minimum cooling capacity, maximum heating capacity, and minimum heating capacity of each water-cooling module 2 are consistent; or the maximum cooling capacity, minimum cooling capacity, maximum heating capacity, and minimum heating capacity of each water-cooling module 2 may be separately configured. Electric vehicles are not limited to battery electric vehicles, but also comprise hybrid electric vehicles capable of battery charging and swap.

### Embodiment 1

When being used in a battery swap process of the electric vehicle, the control module 1 comprises: a parameter acquisition unit, a configuration unit, and an execution unit, wherein the parameter acquisition unit is connected to the configuration unit, and the configuration unit is connected to the execution unit; the parameter acquisition unit is configured to acquire a battery temperature status of a vehicle with a battery to be swapped and a temperature status of a battery to be used as a substitute in the vehicle with a battery to be swapped; and the configuration unit is configured to configure the number of water-cooling modules 2 that need to be connected, and a cooling capacity and a heating capacity of each connected water-cooling module 2 based on the battery temperature status of the vehicle with a battery to be swapped and the temperature status of the battery to be used as the substitute in the vehicle with a battery to be swapped. As an example, if a cell temperature of a battery to be swapped that is sent to the battery charging and swap station is -20°C, and a cell temperature of the battery to be used as the substitute in the vehicle with a battery to be swapped is at normal temperature, according to the properties of the battery and the performance of the battery temperature control apparatus, the amount of the heat exchange between the battery to be used as the substitute in the vehicle with a battery to be swapped and the battery temperature control apparatus needs to reach 9 kw, and supposing that each water-cooling module can provide 4.5 kw heat, the battery to be used as the substitute in the vehicle with a battery to be swapped needs to be connected to at least two water-cooling modules 2 to meet the heat exchange and flow capacity requirements. The execution unit is configured to connect in series the water-cooling modules 2 that need to be connected, to heat or cool the battery to be used as the substitute in the vehicle with a battery to be swapped, to make it consistent with the current supply water temperature of the battery on the vehicle with a battery to be swapped, so as to solve the problem of a change in a volume of a coolant that is caused by a difference between the temperatures of the coolant in the battery charging and swap station and the electric vehicle.

As an example, the parameter acquisition unit is further configured to acquire travelling conditions of the vehicle with a battery to be swapped, and determine, according to a correspondence relationship between the travelling conditions and the battery temperature status, the battery temperature status of the vehicle with a battery to be swapped. The vehicle with a battery to be swapped can send the travelling conditions or the battery temperature status to the parameter acquisition unit through a cloud. The travelling conditions may comprise one or more of: high temperature and low speed, high temperature and normal speed, high temperature and high speed, low temperature and low speed, low temperature and normal speed, and low temperature and high speed. Classification of the travelling conditions is not limited to the above examples, and can be adjusted adaptively during use. The correspondence relationship between the travelling conditions and the temperature status can be obtained by acquiring corresponding battery temperature ranges under different travelling conditions based on pre-collected temperature ranges corresponding to a large number of electric vehicles under different travelling conditions. In addition, a proper maximum cooling capacity, minimum cooling capacity, maximum heating capacity, and minimum heating capacity of the water-cooling module 2 can be set based on the battery temperature range, so that the apparatus is suitable for a plurality of vehicle travelling conditions and has a wider range of application. If the vehicle with a battery to be swapped is switched between the plurality of travelling conditions over a period of time, the temperatures under the plurality of travelling conditions can be averaged, and the average temperature can be used as the temperature used when the vehicle arrives at the battery charging and swap station for a battery swap, or the temperature corresponding to the travelling condition with the longest travelling time is used as the temperature used when the vehicle arrives at the battery swap station for a battery swap, which is certainly not limited thereto.

After the electric vehicle arrives at the battery charging and swap station of the electric vehicle, a battery swap is performed, and a discharged battery swapped out of the vehicle is delivered to a battery storage apparatus for charging.

### Embodiment 2

When being used in a battery charging process, the control module 1 further comprises: a temperature acquisition unit and an adjustment unit, the temperature acquisition unit being connected to the adjustment unit, wherein the temperature acquisition unit is configured to acquire a temperature status (for example, temperature data can be collected at regular intervals) of a charging battery, and the charging battery is a battery in a charging state in the battery charging and swap station of the electric vehicle. When the charging battery is in a charging process, a battery management system (BMS) of the battery can feed back the temperature status of the charging battery to the temperature acquisition unit in real time. The adjustment unit is configured to adjust the number of water-cooling modules 2 connected to the charging battery, and the cooling capacity and the heating capacity of each connected water-cooling module 2 based on the temperature status of the charging battery, thereby ensuring thermal performance of the battery and improving efficiency of heat exchange between the water cooling and the battery. After the battery is fully charged, it can be used for a battery swap for a vehicle.

As an example, the correspondence relationship between the temperature of the charging battery and the number of connected water-cooling modules 2 can be acquired in advance, and the related data can be stored in the adjustment unit for the adjustment unit to call.

In the examples shown in both Embodiment 1 and Embodiment 2, the apparatus comprises a plurality of output ends 5 connected to the water-cooling modules 2 by using the pipelines 3, and the battery of the battery charging and swap station of the electric vehicle is connected to the battery temperature control apparatus by using the output ends 5, as shown in FIG. 1. The control module 1 controls connection between the water-cooling modules and connection between the water-cooling module 2 and the connected battery by controlling the control valves 4. As shown in the example shown in FIG. 2, a control valve 4 is also provided on a pipeline 3 between batteries. When the control valve 4 between the batteries is closed, the batteries may be isolated, so as to prevent some batteries with a normal temperature from being affected by the temperatures of other batteries being too high or too low.

As an example, each pipeline 3 comprises one water supply pipeline 31 and a water return pipeline 32 corresponding to the water supply pipeline 31, and each water supply pipeline 31 and each water return pipeline 32 are provided with one control valve 4.

The water-cooling module 2 can be configured as any existing water-cooling system. As an example, the water-cooling module 2 comprises a compressor, a water-cooling plate, a water pump, electric heater, a water tank, a temperature sensor, an expansion valve, etc. When the temperature of the battery is too high, the apparatus enables a cooling mode, and the connected water-cooling module 2 cools the battery by means of a compressor, a water pump, an expansion valve, etc. When the temperature of the battery is too low, the apparatus enables a heating mode, and the connected water-cooling module 2 heats the battery by means of an electric heater and a water pump. The temperature of the battery is controlled within a proper range through the two modes: the heating mode and the cooling mode, so as to ensure the charging speed of the battery and the life of the battery.

As shown in FIG. 2, as an example, the apparatus may be arranged on the battery storage apparatus 6 of the battery charging and swap station, and adjusts the temperature of the fully charged battery 61 to be used as the substitute in the vehicle with a battery to be swapped to be consistent with the temperature of the battery of the vehicle with a battery to be swapped, or controls the temperature of the charging battery 62 in real time in the charging process of the battery 62 on the battery storage apparatus 6. However, it can be understood that, the apparatus can also be arranged separately or on other components of the battery charging and swap station, for example, on a battery charging apparatus, to control the battery temperature.

The battery temperature control apparatus for a battery charging and swap station of an electric vehicle according to the embodiment of the invention uses a modular manner, and when the cooling capacity, the heating capacity, and the flow capacity of a single water-cooling module 2 cannot meet the requirements of a lithium battery, one or more water-cooling modules 2 can be connected in series to increase the cooling capacity, the heating capacity and the flow capacity, realize individual control of the temperature of each battery, and adapt to diversity of a temperature status of the lithium battery; the apparatus can also ensure efficiency of heat exchange between a water-cooling system and each battery, and can quickly and effectively control the temperature of the battery without causing a waste of performance and energy of the water-cooling system; and in addition, the apparatus can also avoid the mutual influence between the temperatures of the batteries, ensure the flow capacity to each battery, and prevent a change in a volume of a coolant that is caused by a difference between the temperatures of the coolant in the battery charging and swap station and the electric vehicle.

Based on the battery temperature control apparatus for a battery charging and swap station of an electric vehicle in the foregoing embodiment, an embodiment of the invention further provides a battery temperature control method for a battery charging and swap station of an electric vehicle, the method comprising the following steps:
Step S1: connecting a plurality of water-cooling modules by using pipelines, wherein the water-cooling module is configured to cool or heat a refrigerant.
Step S2: respectively arranging one or more control valves on one or more of the pipelines.
Step S3: controlling connection and disconnection of the pipelines by controlling the opening and closing of the control valves, thereby controlling the number of water-cooling modules connected to a corresponding battery pack.

The above steps are described in detail below through two specific embodiments:

### Embodiment 3

When the method is used in a battery swap process of the electric vehicle, and the battery temperature is controlled, the method specifically comprises the following steps:
Step S11: acquiring a battery temperature status of a vehicle with a battery to be swapped and a temperature status of a battery to be used as a substitute in the vehicle with a battery to be swapped.

Before step S11, the method may further comprise the following steps:
Step S100: acquiring a plurality of pieces of battery temperature data under travelling conditions in advance, so as to obtain a correspondence relationship between each travelling condition and the battery temperature status.
S101: setting a proper cooling capacity range and heating capacity range (that is, the maximum cooling capacity, minimum cooling capacity, maximum heating capacity, and minimum heating capacity of each water-cooling module 2) of each water-cooling module 2 according to the temperature range corresponding to all travelling conditions, so that the method is suitable for a plurality of vehicle travelling conditions and has a wider range of application.

It should be noted that each water-cooling module 2 can be configured identically, that is, the maximum cooling capacity, minimum cooling capacity, maximum heating capacity, and minimum heating capacity of each water-cooling module 2 are consistent; or the maximum cooling capacity, minimum cooling capacity, maximum heating capacity, and minimum heating capacity of each water-cooling module 2 may be separately configured. Electric vehicles are not limited to battery electric vehicles, but also comprise hybrid electric vehicles capable of battery charging and swap.

Based on step S100, step S11 comprises the following step:
Step S111: acquiring travelling conditions of the vehicle with a battery to be swapped, and determining, according to a correspondence relationship between the travelling conditions and the battery temperature status, the battery temperature status of the vehicle with a battery to be swapped.

As an example, the travelling conditions comprise one or more of: high temperature and low speed, high temperature and normal speed, high temperature and high speed, low temperature and low speed, low temperature and normal speed, and low temperature and high speed. Classification of the travelling conditions is not limited to the above examples, and can be adjusted adaptively during use.

Step S12: configuring the number of water-cooling modules 2 that need to be connected, and a cooling capacity and a heating capacity of each connected water-cooling module 2 based on the battery temperature status of the vehicle with a battery to be swapped and the temperature status of the battery to be used as the substitute in the vehicle with a battery to be swapped.

Step S13: connecting in series the water-cooling modules 2 that need to be connected, to heat or cool the battery to be used as the substitute in the vehicle with a battery to be swapped, to make it consistent with the current supply water temperature of the battery on the vehicle with a battery to be swapped, so as to solve the problem of a change in a volume of a coolant that is caused by a difference between the temperatures of the coolant in the battery charging and swap station and the electric vehicle.

After the electric vehicle arrives at the battery charging and swap station of the electric vehicle, a battery swap is performed, and a discharged battery swapped out of the vehicle is delivered to a battery storage apparatus for charging.

Embodiment 4. When the method is used in a battery charging process, and the battery temperature is controlled, the method specifically comprises the following steps:
Step S21: acquiring a temperature status of a charging battery, the charging battery being a battery in a charging state in the battery charging and swap station of the electric vehicle.

In the battery charging process, the temperature status of the charging battery can be acquired by means of a BMS of the battery.

Step S22: adjusting the number of water-cooling modules 2 connected to the charging battery, and the cooling capacity and the heating capacity of each connected water-cooling module 2 based on the temperature status of the charging battery, thereby ensuring thermal performance of the battery and improving efficiency of heat exchange between the water cooling and the battery. After the battery is fully charged, it can be used for a battery swap for a vehicle.

As an example, the method further comprises: Step S200: acquiring the correspondence relationship between the temperature of the charging battery and the number of connected water-cooling modules 2 in advance, and storing the related data. After the real-time temperature status of the battery temperature is acquired in step S21, corresponding data can be retrieved to obtain the number of water-cooling modules 2 that need to be connected.

The water-cooling module 2 can be configured as any existing water-cooling system. As an example, the water-cooling module 2 comprises a compressor, a water-cooling plate, a water pump, electric heater, a water tank, a temperature sensor, an expansion valve, etc. When the temperature of the battery is too high, the apparatus enables a cooling mode, and the connected water-cooling module 2 cools the battery by means of a compressor, a water pump, an expansion valve, etc. When the temperature of the battery is too low, the apparatus enables a heating mode, and the connected water-cooling module 2 heats the battery by means of an electric heater and a water pump. The temperature of the battery is controlled within a proper range through the two modes: the heating mode and the cooling mode, so as to ensure the charging speed of the battery and the life of the battery.

The battery temperature control method for a battery charging and swap station of an electric vehicle according to the embodiment of the invention uses a modular manner, and when the cooling capacity, the heating capacity, and the flow capacity of a single water-cooling module 2 cannot meet the requirements of a lithium battery, one or more water-cooling modules 2 can be connected in series to increase the cooling capacity, the heating capacity and the flow capacity, realize individual control of the temperature of each battery, and adapt to diversity of a temperature status of the lithium battery; the method can also ensure efficiency of heat exchange between a water-cooling system and each battery, and can quickly and effectively control the temperature of the battery without causing a waste of performance and energy of the water-cooling system; and in addition, the method can also avoid the mutual influence between the temperatures of the batteries, ensure the flow capacity to each battery, and prevent a change in a volume of a coolant that is caused by a difference between the temperatures of the coolant in the battery charging and swap station and the electric vehicle.

An embodiment further provides a controller, which comprises a memory and a processor, wherein the memory stores a computer program that, when executed by the processor, is capable of implementing the steps of the method.

An embodiment further provides a computer-readable storage medium for storing a computer program that, when executed by a computer or a processor, implements the steps of the method.

An embodiment of the invention further provides a battery charging and swap station, which comprises the battery temperature control apparatus for a battery charging and swap station of an electric vehicle according to the embodiment of the invention.

The foregoing descriptions are merely preferred embodiments of the invention, and are not intended to limit the invention in any form. Although the invention has been disclosed as above by means of the preferred embodiments, these embodiments are not for the purpose of limiting the invention.

## Claims

1. A battery temperature control apparatus for a battery charging and swap station of an electric vehicle, the apparatus comprising a control module and a plurality of water-cooling modules, the water-cooling modules being connected by using pipelines, and one or more of the pipelines being respectively provided with one or more control valves, wherein
the control module controls connection and disconnection of the pipelines by controlling the opening and closing of the control valves, thereby controlling the number of water-cooling modules connected to a corresponding battery; and
the water-cooling module is configured to cool or heat a refrigerant,
**characterized in that**:
the control module comprises a parameter acquisition unit, a configuration unit, and an execution unit, wherein the parameter acquisition unit is connected to the configuration unit, and the configuration unit is connected to the execution unit;
the parameter acquisition unit is configured to acquire a battery temperature status of a vehicle with a battery to be swapped and a temperature status of a battery to be used as a substitute in the vehicle with a battery to be swapped;
the configuration unit is configured to configure the number of water-cooling modules that need to be connected, and a cooling capacity and a heating capacity of each connected water-cooling module based on the battery temperature status of the vehicle with a battery to be swapped and the temperature status of the battery to be used as the substitute in the vehicle with a battery to be swapped; and
the execution unit is configured to connect in series the water-cooling modules that need to be connected, to heat or cool the battery to be used as the substitute in the vehicle with a battery to be swapped, to make it consistent with the current supply water temperature of the battery on the vehicle with a battery to be swapped.

2. The battery temperature control apparatus for a battery charging and swap station of an electric vehicle according to claim 1, **characterized in that**:
the control module is further configured to control a cooling capacity and a heating capacity of each connected water-cooling module.

3. The battery temperature control apparatus for a battery charging and swap station of an electric vehicle according to claim 1, **characterized in that**:
the parameter acquisition unit is further configured to acquire travelling conditions of the vehicle with a battery to be swapped, and determine, according to a correspondence relationship between the travelling conditions and the battery temperature status, the battery temperature status of the vehicle with a battery to be swapped.

4. The battery temperature control apparatus for a battery charging and swap station of an electric vehicle according to claim 1, **characterized in that**:
the control module comprises a temperature acquisition unit and an adjustment unit, the temperature acquisition unit being connected to the adjustment unit, wherein
the temperature acquisition unit is configured to acquire a temperature status of a charging battery, the charging battery being a battery in a charging state in the battery charging and swap station of the electric vehicle; and
the adjustment unit is configured to adjust the number of water-cooling modules connected to the charging battery, and the cooling capacity and the heating capacity of each connected water-cooling module based on the temperature status of the charging battery.

5. The battery temperature control apparatus for a battery charging and swap station of an electric vehicle according to any one of claims 1 to 4, **characterized in that**:
the apparatus comprises a plurality of output ends connected to the water-cooling modules by using the pipelines, and the battery of the battery charging and swap station of the electric vehicle is connected to the battery temperature control apparatus by using the output ends.

6. The battery temperature control apparatus for a battery charging and swap station of an electric vehicle according to any one of claims 1 to 4, **characterized in that**:
each of the pipelines comprises one water supply pipeline and a water return pipeline corresponding to the water supply pipeline, and each of the water supply pipelines and each of the water return pipelines are provided with one control valve.

7. The battery temperature control apparatus for a battery charging and swap station of an electric vehicle according to any one of claims 1 to 4, **characterized in that**:
the control valve is a solenoid valve.

8. A battery temperature control method for a battery charging and swap station of an electric vehicle, the method comprising the following steps:
connecting a plurality of water-cooling modules by using pipelines, wherein the water-cooling module is configured to cool or heat a refrigerant;
respectively arranging one or more control valves on one or more of the pipelines; and
controlling connection and disconnection of the pipelines by controlling the opening and closing of the control valves, thereby controlling the number of water-cooling modules connected to a corresponding battery,
**characterized in that**:
when being used in a battery swap process of the electric vehicle, the method comprises the following steps:
acquiring a battery temperature status of a vehicle with a battery to be swapped and a temperature status of a battery to be used as a substitute in the vehicle with a battery to be swapped;
configuring the number of water-cooling modules that need to be connected, and a cooling capacity and a heating capacity of each connected water-cooling module based on the battery temperature status of the vehicle with a battery to be swapped and the temperature status of the battery to be used as the substitute in the vehicle with a battery to be swapped; and
connecting in series the water-cooling modules that need to be connected, to heat or cool the battery to be used as the substitute in the vehicle with a battery to be swapped, to make it consistent with the current supply water temperature of the battery on the vehicle with a battery to be swapped.

9. The battery temperature control method for a battery charging and swap station of an electric vehicle according to claim 8, **characterized in that**:
said acquiring a battery temperature status of a vehicle with a battery to be swapped comprises the following steps:
acquiring travelling conditions of the vehicle with a battery to be swapped, and determining, according to a correspondence relationship between the travelling conditions and the battery temperature status, the battery temperature status of the vehicle with a battery to be swapped.

10. The battery temperature control method for a battery charging and swap station of an electric vehicle according to claim 8, **characterized in that**: when being used in a battery charging process, the method comprises the following steps:
acquiring a temperature status of a charging battery, the charging battery being a battery in a charging state in the battery charging and swap station of the electric vehicle; and
adjusting the number of water-cooling modules connected to the charging battery, and the cooling capacity and the heating capacity of each connected water-cooling module based on the temperature status of the charging battery.

11. A controller, **characterized by** comprising a memory and a processor, wherein the memory stores a computer program that, when executed by the processor, is capable of implementing the steps of the method according to any one of claims 8 to 10.

12. A computer-readable storage medium, **characterized in that** the computer-readable storage medium is configured to store a computer program that, when executed by a computer or a processor, implements the steps of the method according to any one of claims 8 to 10.

13. A battery charging and swap station, **characterized by** comprising the battery temperature control apparatus for a battery charging and swap station of an electric vehicle according to any one of claims 1 to 7.

## Patentansprüche

1. Batterietemperatursteuervorrichtung für eine Batterielade- und -wechselstation eines Elektrofahrzeugs, wobei die Vorrichtung ein Steuermodul und eine Vielzahl von Wasserkühlmodulen umfasst, wobei die Wasserkühlmodule unter Verwendung von Leitungen verbunden sind und wobei eine oder mehrere der Leitungen jeweils mit einem oder mehreren Steuerventilen ausgestattet sind, wobei
das Steuermodul eine Verbindung und Trennung der Leitungen durch Steuern des Öffnens und des Schließens der Steuerventile steuert, wodurch die Anzahl von Wasserkühlmodulen, die mit einer entsprechenden Batterie verbunden sind, gesteuert wird; und
das Wasserkühlmodul dazu ausgelegt ist, ein Kältemittel abzukühlen oder zu erhitzen,
**dadurch gekennzeichnet, dass**:
das Steuermodul eine Parametererfassungseinheit eine Auslegungseinheit und eine Ausführungseinheit umfasst, wobei die Parametererfassungseinheit mit der Auslegungseinheit verbunden ist und die Auslegungseinheit mit der Ausführungseinheit verbunden ist;
die Parametererfassungseinheit dazu ausgelegt ist, einen Batterietemperaturstatus eines Fahrzeugs mit einer zu wechselnden Batterie und einen Temperaturstatus einer Batterie, die in dem Fahrzeug mit einer zu wechselnden Batterie als ein Ersatz zu verwenden ist, zu erfassen;
die Auslegungseinheit dazu ausgelegt ist, die Anzahl von Wasserkühlmodulen, die zu verbinden sind, und eine Kühlkapazität und eine Heizkapazität jedes verbundenen Wasserkühlmoduls auf Basis des Batterietemperaturstatus des Fahrzeugs mit einer zu wechselnden Batterie und des Temperaturstatus der Batterie, die in dem Fahrzeug mit einer zu wechselnden Batterie als der Ersatz zu verwenden ist, auszulegen; und
die Ausführungseinheit dazu ausgelegt ist, die zu verbindenden Wasserkühlmodule in Reihe zu verbinden, um die Batterie, die in dem Fahrzeug mit einer zu wechselnden Batterie als der Ersatz zu verwenden ist, zu erhitzen oder abzukühlen, um sie mit der aktuellen Zulaufwassertemperatur der Batterie in dem Fahrzeug mit einer zu wechselnden Batterie konsistent zu machen.

2. Batterietemperatursteuervorrichtung für eine Batterielade- und -wechselstation eines Elektrofahrzeugs nach Anspruch 1, **dadurch gekennzeichnet, dass**:
das Steuermodul ferner dazu ausgelegt ist, eine Kühlkapazität und eine Heizkapazität von jedem verbundenen Wasserkühlmodul zu steuern.

3. Batterietemperatursteuervorrichtung für eine Batterielade- und -wechselstation eines Elektrofahrzeugs nach Anspruch 1, **dadurch gekennzeichnet, dass**:
die Parametererfassungseinheit ferner dazu ausgelegt ist, Fahrbedingungen des Fahrzeugs mit einer zu wechselnden Batterie zu erfassen und den Batterietemperaturstatus des Fahrzeugs mit einer zu wechselnden Batterie gemäß einer Entsprechungsbeziehung zwischen den Fahrbedingungen und dem Batterietemperaturstatus zu bestimmen.

4. Batterietemperatursteuervorrichtung für eine Batterielade- und -wechselstation eines Elektrofahrzeugs nach Anspruch 1, **dadurch gekennzeichnet, dass**:
das Steuermodul eine Temperaturerfassungseinheit und eine Einstelleinheit umfasst, wobei die Temperaturerfassungseinheit mit der Einstelleinheit verbunden ist, wobei
die Temperaturerfassungseinheit dazu ausgelegt ist, einen Temperaturstatus einer Batterie im Ladezustand zu erfassen, wobei die Batterie im Ladezustand eine Batterie im Ladezustand in der Batterielade- und -wechselstation des Elektrofahrzeugs ist; und
die Einstelleinheit dazu ausgelegt ist, die Anzahl von Wasserkühlmodulen, die mit der Batterie im Ladezustand verbunden sind, und die Kühlkapazität und die Heizkapazität von jedem der verbundenen Wasserkühlmodule auf Basis des Temperaturstatus der Batterie im Ladezustand einzustellen.

5. Batterietemperatursteuervorrichtung für eine Batterielade- und -wechselstation eines Elektrofahrzeugs nach einem der Ansprüche 1 bis 4, **dadurch gekennzeichnet, dass**:
die Vorrichtung eine Vielzahl von Ausgangsenden umfasst, die über die Leitungen mit den Wasserkühlmodulen verbunden sind, und die Batterielade- und -wechselstation des Elektrofahrzeugs mit der Batterietemperatursteuervorrichtung über die Ausgangsenden verbunden ist.

6. Batterietemperatursteuervorrichtung für eine Batterielade- und -wechselstation eines Elektrofahrzeugs nach einem der Ansprüche 1 bis 4, **dadurch gekennzeichnet, dass**:
jede der Leitungen eine Wasserzulaufleitung und eine Wasserrücklaufleitung, die der Wasserzulaufleitung entspricht, umfasst und jede der Wasserzulaufleitungen und der Wasserrücklaufleitungen mit einem Steuerventil ausgestattet sind.

7. Batterietemperatursteuervorrichtung für eine Batterielade- und -wechselstation eines Elektrofahrzeugs nach einem der Ansprüche 1 bis 4, **dadurch gekennzeichnet, dass**:
das Steuerventil ein Magnetventil ist.

8. Batterietemperatursteuerverfahren für eine Batterielade- und -wechselstation eines Elektrofahrzeugs, wobei das Verfahren die folgenden Schritte umfasst:
Verbinden einer Vielzahl von Wasserkühlmodulen unter Verwendung von Leitungen, wobei die Wasserkühlmodule dazu ausgelegt sind, ein Kältemittel abzukühlen oder zu erhitzen;
jeweiliges Anordnen von einem oder mehreren Steuerventilen an einer oder mehreren der Leitungen und Steuern einer Verbindung und Trennung der Leitungen durch Steuern des Öffnens und des Schließens der Steuerventile, wodurch die Anzahl von Wasserkühlmodulen, die mit einer entsprechenden Batterie verbunden sind, gesteuert wird,
**dadurch gekennzeichnet, dass**:
das Verfahren, wenn es in einem Batteriewechselprozess des Elektrofahrzeugs verwendet wird, die folgenden Schritte umfasst:
Erfassen eines Batterietemperaturstatus eines Fahrzeugs mit einer zu wechselnden Batterie und eines Temperaturstatus einer Batterie, die in dem Fahrzeug mit einer zu wechselnden Batterie als ein Ersatz zu verwenden ist;
Auslegen der Anzahl von Wasserkühlmodulen, die zu verbinden sind, und einer Kühlkapazität und einer Heizkapazität jedes verbundenen Wasserkühlmoduls auf Basis des Batterietemperaturstatus des Fahrzeugs mit einer zu wechselnden Batterie und des Temperaturstatus der Batterie, die in dem Fahrzeug mit einer zu wechselnden Batterie als der Ersatz zu verwenden ist; und
Verbinden der zu verbindenden Wasserkühlmodule in Reihe, um die Batterie, die in dem Fahrzeug mit einer zu wechselnden Batterie als der Ersatz zu verwenden ist, zu erhitzen oder abzukühlen und sie mit der aktuellen Zulaufwassertemperatur der Batterie in dem Fahrzeug mit einer zu wechselnden Batterie konsistent zu machen.

9. Batterietemperatursteuerverfahren für eine Batterielade- und -wechselstation eines Elektrofahrzeugs nach Anspruch 8, **dadurch gekennzeichnet, dass**:
das Erfassen eines Batterietemperaturstatus eines Fahrzeugs mit einer zu wechselnden Batterie die folgenden Schritte umfasst:
Erfassen von Fahrbedingungen des Fahrzeugs mit einer zu wechselnden Batterie und Bestimmen des Batterietemperaturstatus des Fahrzeugs mit einer zu wechselnden Batterie gemäß einer Entsprechungsbeziehung zwischen den Fahrbedingungen und dem Batterietemperaturstatus.

10. Batterietemperatursteuerverfahren für eine Batterielade- und -wechselstation eines Elektrofahrzeugs nach Anspruch 8, **dadurch gekennzeichnet, dass**:
das Verfahren, wenn es in einem Batterieladeprozess verwendet wird, die folgenden Schritte umfasst:
Erfassen eines Temperaturstatus einer Batterie im Ladezustand, wobei die Batterie im Ladezustand eine Batterie im Ladezustand in der Batterielade- und-wechselstation des Elektrofahrzeugs ist; und
Einstellen der Anzahl von Wasserkühlmodulen, die mit der Batterie im Ladezustand verbunden sind, und der Kühlkapazität und der Heizkapazität von jedem der verbundenen Wasserkühlmodule auf Basis des Temperaturstatus der Batterie im Ladezustand.

11. Steuerung, die **dadurch gekennzeichnet ist, dass** sie einen Speicher und einen Prozessor umfasst, wobei im Speicher ein Computerprogramm gespeichert ist, das, wenn es vom Prozessor ausgeführt wird, in der Lage ist, die Schritte des Verfahrens nach einem der Ansprüche 8 bis 10 zu implementieren.

12. Computerlesbares Speichermedium, **dadurch gekennzeichnet, dass** das computerlesbare Speichermedium dazu ausgelegt ist, ein Computerprogramm zu speichern, das, wenn es von einem Computer oder einem Prozessor ausgeführt wird, die Schritte des Verfahrens nach einem der Ansprüche 8 bis 10 implementiert.

13. Batterielade- und -wechselstation **gekennzeichnet durch** Umfassen der Batterietemperatursteuervorrichtung für eine Batterielade- und -wechselstation eines Elektrofahrzeugs nach einem der Ansprüche 1 bis 7.

## Revendications

1. Appareil de régulation de température de batterie pour une station de charge et de permutation de batteries d'un véhicule électrique, l'appareil comportant un module de commande et une pluralité de modules de refroidissement par eau, les modules de refroidissement par eau étant raccordés à l'aide de canalisations, et une ou plusieurs des canalisations étant respectivement munies d'une ou de plusieurs vannes de commande,
le module de commande commandant la connexion et la déconnexion des canalisations en commandant l'ouverture et la fermeture des vannes de commande, commandant ainsi le nombre de modules de refroidissement par eau raccordés à une batterie correspondante ; et
le module de refroidissement par eau étant configuré pour refroidir ou chauffer un agent frigorigène, **caractérisé en ce que** :
le module de commande comporte une unité d'acquisition de paramètres, une unité de configuration, et une unité d'exécution, l'unité d'acquisition de paramètres étant reliée à l'unité de configuration, et l'unité de configuration étant reliée à l'unité d'exécution ;
l'unité d'acquisition de paramètres est configurée pour acquérir un état de température de batterie d'un véhicule doté d'une batterie à échanger et un état de température d'une batterie à utiliser en remplacement dans le véhicule doté d'une batterie à échanger ;
l'unité de configuration est configurée pour configurer le nombre de modules de refroidissement par eau qu'il est nécessaire de raccorder, et une capacité de refroidissement et une capacité de chauffage de chaque module de refroidissement par eau raccordé d'après l'état de température de batterie du véhicule doté d'une batterie à échanger et l'état de température de la batterie à utiliser en remplacement dans le véhicule doté d'une batterie à échanger ; et
l'unité d'exécution est configurée pour raccorder en série les modules de refroidissement par eau qu'il est nécessaire de raccorder, pour chauffer ou refroidir la batterie à utiliser en remplacement dans le véhicule doté d'une batterie à échanger, pour la rendre cohérente avec la température actuelle d'eau d'alimentation de la batterie présente sur le véhicule doté d'une batterie à échanger.

2. Appareil de régulation de température de batterie pour une station de charge et de permutation de batteries d'un véhicule électrique selon la revendication 1, **caractérisé en ce que** :
le module de commande est en outre configuré pour commander une capacité de refroidissement et une capacité de chauffage de chaque module de refroidissement par eau raccordé.

3. Appareil de régulation de température de batterie pour une station de charge et de permutation de batteries d'un véhicule électrique selon la revendication 1, **caractérisé en ce que** :
l'unité d'acquisition de paramètres est en outre configurée pour acquérir des conditions de déplacement du véhicule doté d'une batterie à échanger, et déterminer, selon une relation de correspondance entre les conditions de déplacement et l'état de température de batterie, l'état de température de batterie du véhicule doté d'une batterie à échanger.

4. Appareil de régulation de température de batterie pour une station de charge et de permutation de batteries d'un véhicule électrique selon la revendication 1, **caractérisé en ce que** :
le module de commande comporte une unité d'acquisition de température et une unité de réglage, l'unité d'acquisition de température étant reliée à l'unité de réglage,
l'unité d'acquisition de température étant configurée pour acquérir un état de température d'une batterie en charge, la batterie en charge étant une batterie en état de charge dans la station de charge et de permutation de batteries du véhicule électrique ; et
l'unité de réglage étant configurée pour régler le nombre de modules de refroidissement par eau raccordés à la batterie en charge, et la capacité de refroidissement et la capacité de chauffage de chaque module de refroidissement par eau raccordé d'après l'état de température de la batterie en charge.

5. Appareil de régulation de température de batterie pour une station de charge et de permutation de batteries d'un véhicule électrique selon l'une quelconque des revendications 1 à 4, **caractérisé en ce que** :
l'appareil comporte une pluralité d'extrémités de sortie raccordées aux modules de refroidissement par eau à l'aide des canalisations, et la batterie de la station de charge et de permutation de batteries du véhicule électrique est raccordée à l'appareil de régulation de température de batterie à l'aide des extrémités de sortie.

6. Appareil de régulation de température de batterie pour une station de charge et de permutation de batteries d'un véhicule électrique selon l'une quelconque des revendications 1 à 4, **caractérisé en ce que** :
chacune des canalisations comporte une canalisation d'alimentation en eau et une canalisation de retour d'eau correspondant à la canalisation d'alimentation en eau, et chacune des canalisations d'alimentation en eau et chacune des canalisations de retour d'eau sont munies d'une vanne de commande.

7. Appareil de régulation de température de batterie pour une station de charge et de permutation de batteries d'un véhicule électrique selon l'une quelconque des revendications 1 à 4, **caractérisé en ce que** :
la vanne de commande est une électrovanne.

8. Procédé de régulation de température de batterie pour une station de charge et de permutation de batteries d'un véhicule électrique, le procédé comportant les étapes suivantes :
raccorder une pluralité de modules de refroidissement par eau à l'aide de canalisations, le module de refroidissement par eau étant configuré pour refroidir ou chauffer un agent frigorigène ;
disposer respectivement une ou plusieurs vannes de commande sur une ou plusieurs des canalisations ; et
commander la connexion et la déconnexion des canalisations en commandant l'ouverture et la fermeture des vannes de commande, commandant ainsi le nombre de modules de refroidissement par eau raccordés à une batterie correspondante,
**caractérisé en ce que** :
lorsqu'il est utilisé dans un processus de permutation de batteries du véhicule électrique, le procédé comporte les étapes suivantes :
acquérir un état de température de batterie d'un véhicule doté d'une batterie à échanger et un état de température d'une batterie à utiliser en remplacement dans le véhicule doté d'une batterie à échanger ;
configurer le nombre de modules de refroidissement par eau qu'il est nécessaire de raccorder, et une capacité de refroidissement et une capacité de chauffage de chaque module de refroidissement par eau raccordé d'après l'état de température de batterie du véhicule doté d'une batterie à échanger et l'état de température de la batterie à utiliser en remplacement dans le véhicule doté d'une batterie à échanger ; et
raccorder en série les modules de refroidissement par eau qu'il est nécessaire de raccorder, pour chauffer ou refroidir la batterie à utiliser en remplacement dans le véhicule doté d'une batterie à échanger, pour la rendre cohérente avec la température actuelle d'eau d'alimentation de la batterie présente sur le véhicule doté d'une batterie à échanger.

9. Procédé de régulation de température de batterie pour une station de charge et de permutation de batteries d'un véhicule électrique selon la revendication 8, **caractérisé en ce que** :
ladite acquisition d'un état de température de batterie d'un véhicule doté d'une batterie à échanger comporte les étapes suivantes :
acquérir des conditions de déplacement du véhicule doté d'une batterie à échanger, et déterminer, selon une relation de correspondance entre les conditions de déplacement et l'état de température de batterie, l'état de température de batterie du véhicule doté d'une batterie à échanger.

10. Procédé de régulation de température de batterie pour une station de charge et de permutation de batteries d'un véhicule électrique selon la revendication 8, **caractérisé en ce que** : lorsqu'il est utilisé dans un processus de charge de batterie, le procédé comporte les étapes suivantes :
acquérir un état de température d'une batterie en charge, la batterie en charge étant une batterie en état de charge dans la station de charge et de permutation de batteries du véhicule électrique ; et
régler le nombre de modules de refroidissement par eau raccordés à la batterie en charge, et la capacité de refroidissement et la capacité de chauffage de chaque module de refroidissement par eau raccordé d'après l'état de température de la batterie en charge.

11. Moyen de commande, **caractérisé en ce qu'**il comporte une mémoire et un processeur, la mémoire conservant un programme informatique qui, lorsqu'il est exécuté par le processeur, est capable de mettre en œuvre les étapes du procédé selon l'une quelconque des revendications 8 à 10.

12. Support de stockage lisible par ordinateur, **caractérisé en ce que** le support de stockage lisible par ordinateur est configuré pour conserver un programme informatique qui, lorsqu'il est exécuté par un ordinateur ou un processeur, met en œuvre les étapes du procédé selon l'une quelconque des revendications 8 à 10.

13. Station de charge et de permutation de batteries, **caractérisée en ce qu'**elle comporte l'appareil de régulation de température de batterie pour une station de charge et de permutation de batteries d'un véhicule électrique selon l'une quelconque des revendications 1 à 7.
